Europäisches Patentamt

European Patent Office

Office européen des brevets

(19)

(11) **EP 0 929 967 B1**

(12) **EUROPÄISCHE PATENTSCHRIFT**

(45) Veröffentlichungstag und Bekanntmachung des Hinweises auf die Patenterteilung:
**04.02.2004 Patentblatt 2004/06**

(51) Int Cl.$^7$: **H04M 15/00**, H04M 19/00, H04M 19/02

(21) Anmeldenummer: **97942695.4**

(22) Anmeldetag: **02.10.1997**

(86) Internationale Anmeldenummer:
**PCT/AT1997/000211**

(87) Internationale Veröffentlichungsnummer:
**WO 1998/015110 (09.04.1998 Gazette 1998/14)**

(54) **SCHALTUNGSANORDNUNG ZUR FERNSPEISUNG**

REMOTE SUPPLY CIRCUITRY

CIRCUIT DE TELEALIMENTATION

(84) Benannte Vertragsstaaten:
**DE FR GB**

(30) Priorität: **02.10.1996 AT 174496**
**26.09.1997 AT 164397**

(43) Veröffentlichungstag der Anmeldung:
**21.07.1999 Patentblatt 1999/29**

(73) Patentinhaber: **ERICSSON AUSTRIA AKTIENGESELLSCHAFT**
**1120 Wien (AT)**

(72) Erfinder:
• **STADLBAUER, Günther**
**A-1100 Wien (AT)**
• **STEININGER, Robert**
**A-2326 Lanzendorf (AT)**

(74) Vertreter:
**Gibler, Ferdinand, Dipl.-Ing. Dr. techn. et al**
**Patentanwalt**
**Dorotheergasse 7**
**1010 Wien (AT)**

(56) Entgegenhaltungen:
**EP-A- 0 145 038       EP-A- 0 178 993**

• **MASAO AKATA ET AL: "A NO-TRIMMING SLIC TWO-CHIP SET WITH COIN TELEPHONE SIGNALING FACILITIES" IEEE JOURNAL OF SOLID-STATE CIRCUITS, Bd. 25, Nr. 2, 1.April 1990, Seiten 458-465, XP000116687**
• **MOONS E ET AL: "UNIVERSAL HIGH VOLTAGE SUBSCRIBER LINE INTERFACE CIRCUIT IN A COMBINED CMOS-DMOS-BIPOLAR TECHNOLOGY" ALCATEL TELECOMMUNICATIONS REVIEW, Bd. 65, Nr. 2, 1.Januar 1992, Seiten 112-118, XP000291595**

EP 0 929 967 B1

**Beschreibung**

Die Erfindung betrifft eine Schaltungsanordnung zur Fernspeisung eines Teilnehmeranschlusses in einem Kommunikationssystem, insbesondere einem Pair-Gain-System, mit über Teilnehmerleitungen mit einer zentralen Stelle, z.B. einem Ortsteil, verbindbaren Teilnehmern, wobei die Speisespannungs- bzw. -stromzufuhr zum Teilnehmer über jeweils zumindest ein mit dem Teilnehmer und der zugehörigen Teilnehmerleitung in Serie geschaltetes Speisungstrennelement erfolgt, welches zumindest eine Speisungstrennelement mit einem Anschluß mit einer dem Teilnehmer zugeordneten Versorgungsspannungsquelle und mit dem anderen Anschluß mit einer Ader der Teilnehmerleitung verbunden ist.

Bei bekannten Schaltungsanordnungen dieser Art erfolgt die Gleichstrom-Fernspeisung der Teilnehmer mittels beispielsweise in einem Ortsteil einer Vorfeldeinrichtung, eines Vermittlungsamtes o.ä. vorgesehenen Speisungstrennelementen, welche typisch in Form von Widerständen, Induktivitäten oder Stromquellen gebildet sein können, um eine unabhängig von der Entfernung des Teilnehmers gleich große Versorgungsleistung zur Verfügung zu stellen, dabei aber eine Trennung von Signal- und Speisekreis zu sichern.

Aus der EP-A2-0 178 993 ist eine Schaltungsanordnung für eine Teilnehmerschnittstelle bekanntgeworden, bei der zur Herabsetzung der auftretenden Verlustleistung zu einer Amts-Versorgungsspannungsquelle eine Hilfsspannungsquelle hinzugeschaltet werden kann. Die Amts-Versorgungsspannungsquelle ist über hochohmige Speisewiderstände an die Teilnehmerleitung angeschlossen und ermöglicht die Detektion des aufgelegten oder des abgehobenen Zustandes des Teilnehmerendgerät-Hörers. Nach Detektion eines abgehobenen Hörers wird die durch einen DC-Wandler gebildete Hilfsspannungsquelle für die Sprachsignalverstärkung und für die Rufspannungserzeugung aktiviert, die über weitere Speisewiderstände an die Teilnehmerleitung geschaltet wird. Damit kann die im aufgelegten Zustand entstehende Verlustleistung sehr gering gehalten werden. Die Hilfsspannungsquelle ist dabei durch eine Operationsverstärker-Einheit gebildet, die bei Auftreten einer. Rufspannung und während des abgehobenen Zustandes eingeschaltet wird.

Der Spannungsabfall an den Speisungstrennelementen wird in herkömmlichen Schaltungsanordnungen nach dem höchsten gesendeten und zu empfangenden Sprachpegel und dem höchsten Gebührenimpulspegel dimensioniert. Da die Gebührenimpulse in bestimmten Abständen nur für eine kurze Zeit gesendet werden, muß die in den verbleibenden Zeitspannen überschüssige Leistung im Speisungstrennelement über Verlustwärme abgeführt werden. Weiters herrschen hinsichtlich der Sprachpegel in den verschiedenen Ländern unterschiedliche Vorschriften, daher wird die Speisespannung nach dem höchsten dieser Pegel ausgelegt, wodurch in Ländern mit geringem relativen Pegel in den Schaltungsanordnungen zusätzliche Verlustleistung auftritt. Dies verringert die Fernspeisereichweite besonders bei femgespeisten Vorfeldeinrichtungen.

Ein weiterer Nachteil der bekannten Schaltungsanordnungen liegt darin, daß für jeden Teilnehmer diejenige Energie zur Verfügung gestellt wird, die für die weitestmögliche Entfernung eines Teilnehmers vom Ortsteil noch eine reguläre Versorgung desselben erlaubt. Die für einen näher gelegenen Teilnehmer verbleibende Überschußenergie muß somit ebenfalls im Ortsteil in Form von Wärme vernichtet werden. Dadurch müssen teilweise sehr hohe Wärmemengen abgeführt werden, was etwa bei großer Teilnehmeranzahl in zentralen Ämtern das Errichten einer eigens diesem Zweck dienenden Kühlvorrichtung zur Folge hat. Dabei wird nicht nur Energie verschwendet, sondern auch durch die Notwendigkeit der ständigen Aufrechterhaltung der Kühlung ein beträchtlicher Aufwand verursacht.

Die Aufgabe der Erfindung besteht daher darin, diese Nachteile zu vermeiden und eine Schaltungsanordnung der eingangs genannten Art anzugeben, welche eine Reduktion der Verlustwärme ermöglicht, sodaß eine Kühlvorrichtung nicht erforderlich ist.

Eine weitere Aufgabe der Erfindung ist es, einen hohen Nutzungsgrad der für die Teilnehmerspeisungen zur Verfügung stehenden Energie zu erreichen.

Weiters soll sich eine Erhöhung der Anzahl der zu versorgenden Teilnehmer ergeben. Weiteres Ziel der Erfindung ist es, eine Erhöhung der Speisereichweite einzelner Teilnehmer zu erreichen.

Erfindungsgemäß wird dies dadurch erreicht, daß die Ausgangsspannung der Versorgungsspannungsquelle in Abhängigkeit von einer der Verlustleistung der zentralen Stelle proportionalen Meßgröße steuerbar ist.

Über die steuerbare Ausgangsspannung der Versorgungsspannungsquelle kann der Spannungsabfall am Speisungstrennelement in Abhängigkeit von einer Steuergröße, über die die Ursache der in den Ortsteilen auftretenden Verlustleistung ermittelbar und quantifizierbar ist, auf das notwendige Maß reduziert werden.

In weiterer Ausbildung der Erfindung ist vorgesehen, daß die der Verlustleistung der zentralen Stelle proportionale Meßgröße durch den Gebührenimpulspegel und/oder den Sprachsignalpegel gebildet ist, und daß die Versorgungsspannungsquelle einen ersten Steuereingang aufweist, welcher mit dem Ausgang einer Steuereinheit verbunden ist, welche in Abhängigkeit vom zeitlichen Verlauf und der Höhe des Gebührenimpulspegels und/oder des Sprachsignalpegels bzw. des auf der Teilnehmerleitung maximal auftretenden Sprachsignalpegels analoge oder digitale Steuersignale erzeugt.

Vor der Aktivierung eines Gebührenimpulses wird über den ersten Steuereingang die Ausgangsspannung der Versorgungsspannungsquelle und damit der Spannungsabfall am Speisungstrennelement erhöht und nach dem Gebührenimpuls wieder auf den Ausgangswert abgesenkt. Hinsichtlich des auf der Teilnehmerleitung maximal auftretenden Sprachsignalpegels kann die Versorgungsspannung über die Steuereinheit auf den für ein Land oder eine Region vereinbarten Wert angepaßt werden oder es kann eine Steuerung in Abhängigkeit des zeitlichen Verlaufes des Sprachsignalpegels vorgenommen werden.

In Weiterbildung der Erfindung ist vorgesehen, daß eine Erhöhung oder Absenkung der Ausgangsspannung der Versorgungsspannungsquelle infolge der Steuersignale an einem ihrer Steuereingänge, vorzugsweise entsprechend einer mathematischen Funktion, ansteigend bzw. abfallend erfolgt, sodaß der durch den Übergang bewirkte Anteil an Harmonischen unterhalb der untersten auf der Teilnehmerleitung auftretenden Sprachfrequenz, vorzugsweise unterhalb 300 Hz, liegt.

Auf diese Weise wird verhindert, daß durch einen sprungartigen Übergang von einem Spannungszustand in den anderen es zu einer Ausbildung von Störfrequenzen kommt, die dem Sprachsignal überlagert beim Teilnehmer hörbar und für den Gesprächsverlauf störend wären.

Gemäß einer anderen Variante der Erfindung kann vorgesehen sein, daß die der Verlustleistung der zentralen Stelle proportionale Meßgröße durch den am Speisungstrennelement auftretenden Spannungsabfall gebildet ist, und daß die Versorgungsspannungsquelle einen zweiten Steuereingang aufweist, welcher mit dem Ausgang einer weiteren Steuereinheit verbunden ist, welche weitere Steuereinheit an ihren Eingängen den Spannungsabfall an dem zumindest einen Speisungstrennelement abgreift, sodaß die Ausgangsspannung der Versorgungsspannungsquelle in Abhängigkeit von dem am Speisungstrennelement auftretenden Spannungsabfall steuerbar ist.

Auf diese Weise wird eine Minimierung der Verlustleistung durch Anpassung der Versorgungsspannung an den tatsächlich vorhandenen Teilnehmerschleifenwiderstand ermöglicht, sodaß sowohl eine Optimierung der Speisereichweite für die Anzahl der Teilnehmer als auch eine Verringerung der abzuführenden Verlustwärme in den Speisungstrennelementen die Folge ist. Es können somit größere Einzelteilnehmerreichweiten bei gleicher Summenreichweite erzielt werden.

Ein weiteres Merkmal der Erfindung kann darin bestehen, daß zusätzlich zu dem zumindest einen Speisungstrennelement ein weiteres Speisungstrennelement vorgesehen ist, welches zwischen der anderen Teilnehmerleitungsader und Masse geschaltet ist.

Eine solche symmetrische Speisung dient der Erfüllung von nationalen und internationalen Vorschriften und Standards. Weiters können nicht näher beschriebene zusätzliche Symmetrierungsschaltungen vorgesehen sein.

Gemäß einer weiteren Ausbildung der Erfindung kann vorgesehen sein, daß das Speisungstrennelement durch eine Konstantstromquelle, eine Induktivität, eine elektronische Drossel oder einen ohmschen Widerstand gebildet ist.

Sowohl die Konstantstromquelle, die Induktivität, die elektronische Drossel als auch der ohmsche Widerstand ermöglichen die Zufuhr der Speisung zum Teilnehmer, verhindern dabei aber einen Kurzschluß der auf der Teilnehmerleitung übermittelten Signalspannungen.

In weiterer Ausbildung der Erfindung kann vorgesehen sein, daß die Versorgungsspannungsquelle zur Teilnehmerspeisung durch einen steuerbaren Schaltregler gebildet ist.

Dadurch kann eine Veränderung der Höhe der Versorgungsspannung auf einfache Weise gesteuert werden.

Nach einem weiteren Merkmal der Erfindung kann der Schaltregler durch einen im Ortsteil vorhandenen Rufspannungsgenerator gebildet sein.

In vielen Realisierungen von Ortsteilen ist jedem Teilnehmer ein eigener Rufspannungsgenerator zugeordnet, welcher einen Schaltregler beinhaltet, der für die Erzeugung der Versorgungsspannung herangezogen werden kann, sodaß keine eigene Schaltung dafür vorgesehen werden muß.

In weiterer Ausbildung der Erfindung kann vorgesehen sein, daß die weitere Steuereinheit aus einem Regelverstärker gebildet ist, und daß der Ausgang des Regelverstärkers mit dem zweiten Steuereingang des Schaltreglers verbunden ist, sodaß der Spannungsabfall an den beiden Anschlüssen des Speisungstrennelements durch Steuern der Versorgungsspannungsquelle konstant gehalten wird.

Durch einen solcherart gebildeten Regelkreis gelingt es, einen konstanten Spannungsabfall an dem zumindest einen Speisungstrennelement zu erreichen und damit eine besonders geringe Verlustleistung in diesem zu ermöglichen, unabhängig davon, ob gerade eine sehr kurze oder eine sehr lange Teilnehmerleitung vorliegt.

In weiterer Ausbildung der Erfindung kann vorgesehen sein, daß der Rufspannungskreis und der Fernspeisungskreis durch einen steuerbaren Schalter, z.B. ein Relais, insbesondere ein Line Card Access Switch, umschaltbar sind.

Die Einspeisung des Rufstroms an den Teilnehmer kann zwar auch über das zumindest eine Speisungstrennelement erfolgen, zur Erzielung eines hohen Rufstromes ist jedoch eine Trennung von Rufspannungs- und Speisungskreis durch z.B. ein Relais von Vorteil.

Die Erfindung wird nachstehend anhand der in den Zeichnungen dargestellten Ausführungsbeispiele eingehend erläutert. Es zeigt dabei

Fig.1 eine Ausführungsform der erfindungsgemäßen Schaltungsanordnung;

Fig.2 eine weitere Ausführungsform der erfindungsgemäßen Schaltungsanordnung;

Fig.3 ein Ersatzschaltbild einer Schaltungsanordnung zur Fernspeisung;

Fig.4 ein Spannungs-Zeitdiagramm der Versorgungsspannung und der Gebührenimpulse;

Fig.5 eine weitere Ausführungsform der erfindungsgemäßen Schaltungsanordnung und

Fig.6 eine weitere Ausführungsform der erfindungsgemäßen Schaltungsanordnung.

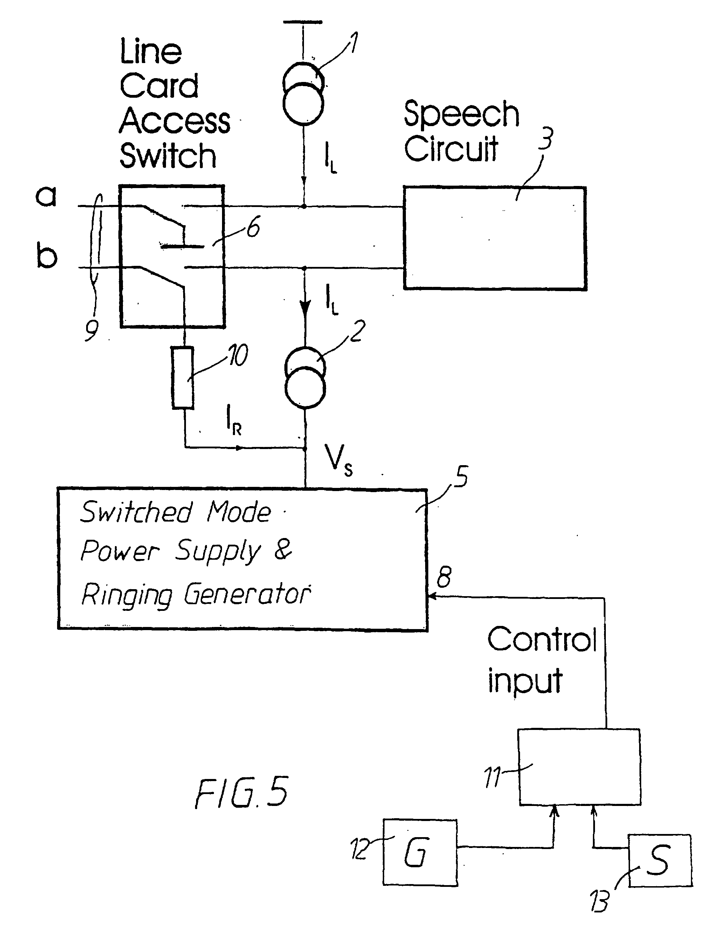

In Fig.5 ist eine Schaltungsanordnung zur Fernspeisung eines Teilnehmeranschlusses in einem Ortsteil eines Pairgain-Systems dargestellt. Die Erfindung ist aber nicht nur auf solche Systeme beschränkt sondern kann für alle Kommunikationssysteme eingesetzt werden, in denen eine Femspeisung eines Teilnehmers vorgenommen wird. Über eine Teilnehmerleitung 9 mit Adern a,b ist der nicht dargestellte Teilnehmer, der in verschiedener Entfernung vom Ortsteil angebracht sein kann, mit diesem verbindbar. Gemäß dem in Fig.5 gezeigten Ausführungsbeispiel ist ein Rufspannungskreis mit einem Rufstrom $I_R$ und ein Fernspeisungskreis mit einem Speisestrom $I_L$ zu erkennen, die über einen Line Card Access Switch bzw. Relais 6 getrennt bzw. umschaltbar sind.

In Fig.5 erfolgt eine bei Telephonsystemen übliche symmetrische Speisung durch zwei als Konstantstromquellen 1, 2 ausgebildete Speisungstrennelemente, welche einen konstanten Strom $I_L$ von einer dem Teilnehmer zugeordneten Versorgungsspannungsquelle 5 kommend über die Teilnehmerleitung a, b zur Masse einprägen, wenn der Schalter 6-die entsprechende Verbindung herstellt, die in Fig.5 gerade unterbrochen ist. Die Stromversorgung mit Konstantstrom kann aber genauso nur über eines der beiden Speisungstrennelemente 1, 2 erfolgen.

Die Konstantstromquelle 1, 2 ist deshalb ein Speisungstrennelement, weil einerseits die Zufuhr der Speisung des Teilnehmers vorgenommen und andererseits verhindert wird, daß die auf der Teilnehmerleitung 9 übertragenen Signale nicht über die Versorgungsspannungsanschlüsse kurzgeschlossen werden. Speisungstrennelemente können auch durch einen ohmschen Widerstand und/oder eine Induktivität, eine elektronische Drossel oder äquivalente Elemente realisiert werden.

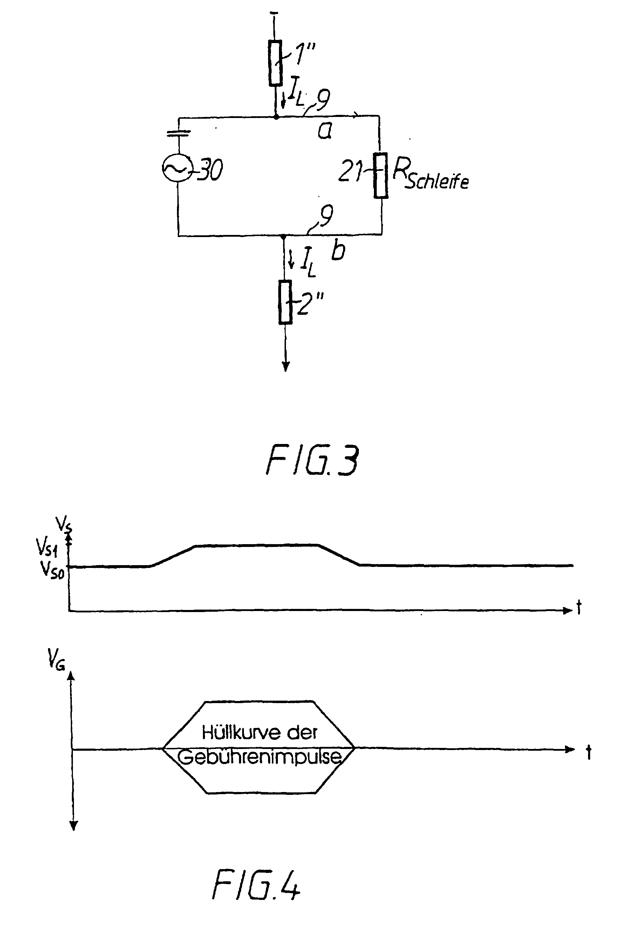

Bei herkömmlichen Systemen wird der Strom $I_L$ in der Teilnehmerleitung a, b durch Konstantstromquellen konstant gehalten bzw. es erfolgt eine Widerstandsspeisung, wie aus der Darstellung gemäß Fig.3 zu entnehmen, von einer Versorgungsspannung $V_S$ über eine Speiseimpedanz 2" zur Teilnehmerleitung 9 und von dieser über eine zweite Speiseimpedanz 1" zur Erde, unabhängig davon wie lange die Teilnehmerleitung (a,b) 9 gerade ist, wobei die in der Spannungsquelle 5 (Fig.5) generierte Versorgungsspannung $V_S$ ebenso konstant ist, mit welcher sich über den aus dem Leitungswiderstand und dem Teilnehmerendgerät gebildeten Schleifenwiderstand $R_{Schleife}$ ein Speisestrom $I_L$ ergibt.

Die erforderliche Speisespannung $V_S$ setzt sich aus den Spannungsabfällen an den Speisungstrennelementen 1" und 2" und dem Spannungsabfall am Schleifenwiderstand $R_{Schleife}$ zusammen, wobei $R_{Schleife} = R_{Apparat} + R_{Leitung}$.

$$V_S = 2. V_{ST} + I_L.R_{Schleife}$$

Aufgrund der auf der Teilnehmerleitung 9 übertragenen Sprach-Wechselspannungen, welche in Fig.3 durch eine Wechselspannungsquelle 30 erzeugt werden, muß ein aussteuerfähiges Potential der Gleichstromspeisespannung mitberücksichtigt werden.

Daher ergibt sich als minimal erforderliche Speisespannung

$$V_{ST} = V_G + V_{SE} + V_{SS} + V_O$$

wobei

$V_G$      Gebührenimpulsspitzenspannung

$V_{SE}$      empfangene Sprachsignalspitzenspannung

$V_{SS}$      gesendete Sprachsignalspitzenspannung

$V_O$      schaltungsbedingte Verlustspannung

$V_G$ liegt bei Vermittlungsämtern üblicherweise zwischen 2,4 und 14 V (2 bis 10 $V_{eff}$) und bei Vorfeldeinrichtungen zwischen 0,7 und 1,4 V (0,5 bis 1,0 $V_{eff}$).

Für den ITU-T-standardisierten Sprachpegel gilt die Definition

Sprachpegel [dBm] = Sprachspitzenpegel [dBm] + relativer Pegel [dBr]

Während der Sprachspitzenpegel mit 3,14 dBm (A-law Sprachkodierung) bzw. 3,17 dBm (µlaw Sprachkodierung) festgelegt ist, variiert der relative Pegel von Land zu Land, z.B. -7dBr.

Für letzteren Wert ergeben sich $V_{SE}$ und $V_{SS}$ sich zu

$$V_{SE/SS} = 1,4.0,775.\ 10^{\text{Sprachpegel/20}} = 1,4.0,775.10^{-3,86/20} = 0,7\ V$$

Für einen relativen Pegel von 0 dBr wäre $V_{SE/SS}$ = 1,27 V.

Damit liegt der Sprachpegel deutlich unter dem Gebührenimpulspegel.

Aufgrund der Berücksichtigung des Sprach- und des Gebührenimpulspegels wird gemäß dem Stand der Technik die Versorgungsspannung $V_S$ auf der Teilnehmerleitung bei der Dimensionierung der Schaltungsanordnung entsprechend höher gewählt und konstant auf diesem Wert belassen, damit für alle möglichen Betriebsfälle ausreichende Versorgungssicherheit gegeben ist. In den Pausen zwischen den Gebührenimpulsen oder in Ländern mit niedrigem, maximalen Sprachpegel erhöht sich dadurch der Spannungsabfall am Speisungstrennelement, wodurch sich eine erhöhte Verlustleistung an diesem ergibt.

Erfindungsgemäß wird dies dadurch vermieden, daß die Ausgangsspannung $V_S$ der Versorgungsspannungsquelle 5 steuerbar ist: Im Ausführungsbeispiel gemäß Fig.5 weist die Versorgungsspannungsquelle 5 dazu ein ersten Steuereingang 8 auf, welcher mit dem Ausgang einer Steuereinheit 11 verbunden ist. Die Steuereinheit 11 erzeugt in Abhängigkeit vom zeitlichen Verlauf und der Höhe des Gebührenimpulspegels und/oder des Sprachsignalpegels bzw. von der Höhe des auf der Teilnehmerleitung maximal auftretenden Sprachsignalpegels Steuersignale, welche der Beeinflussung der Ausgangsspannung $V_S$ dienen.

Die Informationen über den Gebührenimpulspegel und den Sprachsignalpegel liegen im Ortsteil für die Steuereinheit 11 direkt vor, dies ist in Fig.5 durch die Funktionsblöcke 12 und 13 angedeutet, die diese Informationen an die Steuereinheit 11 weitergeben. Der Steuereingang 8 kann dabei über eine analoge Steuerspannung oder einen digitalen Wert angesteuert werden, es kann also beispielsweise eine serielle oder parallele Busschnittstelle oder etwa ein pulsweitengesteuertes Steuersignal vorgesehen sein, diesbezüglich besteht keine Einschränkung. Grundsätzlich wirkt sich die Steuereinheit 11 so aus, daß sie über den Steuereingang 8 eine Erhöhung der Versorgungsspannung $V_S$ vor dem Aussenden von Gebührenimpulsen und ein Herabsenken der Versorgungsspannung nach dem Aussenden der Gebührenimpulse bewirkt wird. Dieser Vorgang ist unmittelbar anhand der Spannungszeitdiagramme von Fig.4 nachvollziehbar. Der Einfachheit wegen sind die Gebührenimpulse $V_G$ in dieser Darstellung nur mit ihrer Hüllkurve wiedergegeben. Die Ausgangsspannung $V_S$ der Versorgungsspannungsquelle 5 wird entsprechend von einem Wert $V_{S0}$, der während der Gebührenimpulspausen vorliegt, auf einen Wert $V_{S1}$ erhöht, während dem Senden der Gebührenimpulse aufrecht erhalten und nach Beenden derselben wieder auf den Wert $V_{S0}$ abgesenkt.

Wenn es die Energiebilanz des Systems erfordert, können bei gleichzeitigem Eintreffen von Gebührenimpulsen bei verschiedenen Teilnehmern diese geschachtelt, z.B. indem diese zeitlich versetzt oder verzögert werden, damit es zu keinen allzu großen Lastsprüngen kommen kann.

Für den bedeutend kleineren Sprachpegel geschieht die Anpassung der Ausgangsspannung $V_S$ der Versorgungsspannungsquelle 5 vorzugsweise durch Vorgabe eines Einstellwertes in der Einheit 13, der dem nationalen, maximalen Sprachsignalpegel entspricht. Es kann aber Null abfällt, entsprechend berücksichtigt. Weiters besteht, wie vorstehend bereits angedeutet, die Möglichkeit, die Versorgungsspannung in Abhängigkeit vom tatsächlich vorliegenden Sprachsignalpegel, gegebenenfalls mit einem geringen Sicherheitszuschlag, auf der Teilnehmerleitung einzustellen. Dies hat den Nachteil, daß bei schnellen Pegelsprüngen, die an sich bei der Sprachübertragung unüblich sind, während einer kurzen Zeitspanne im Millisekundenbereich eine Sprachverzerrung eintritt, bis die richtige Versorgungsspannung eingeregelt ist. Bei Erkennung einer Datenübertragung mittels Modem wird nach der Erkennung des Kenntons auf den maximalen Sprachpegel geschaltet.

Dadurch kann die Verlustleistung am Speisungstrennelement während der Gebührenimpulspausen sowie entsprechend den unterschiedlichen relativen Sprachpegeln gering gehalten werden.

In Fig.5 ist die steuerbare Versorgungsspannungsquelle 5 durch einen Schaltregler gebildet. Da ein Rufspannungsgenerator 5 einen solchen Schaltregler beinhalten kann, ist es von besonderem Vorteil, wenn dieser für den Zweck der Steuerbarkeit der Versorgungsspannung $V_S$ mitverwendet wird.

Dies bedeutet für das Ausführungsbeispiel gemäß Fig.5, daß in der gezeigten Schalterstellung des Line Card Access Switch 6 der Schaltregler 5 über einen Widerstand 10 die Rufspannung erzeugt, während er in der anderen Stellung des steuerbaren Schalters 6, der auch durch ein einfaches Relais realisiert werden kann, gesteuert über einen Steuereingang 7 die Versorgungsspannung $V_S$ für die Stromquellen 1, 2 bildet.

Um keine hörbaren Störgeräusche zu verursachen, erfolgt eine Erhöhung oder Absenkung der Ausgangsspannung $V_S$ der Versorgungsspannungsquelle 5 infolge eines Steuersignals an einem ihrer Steuereingänge 7, 8, vorzugsweise entsprechend einer mathematischen Funktion, ansteigend bzw. abfallend, sodaß der durch den Übergang bewirkte Anteil an Harmonischen unterhalb der untersten auf der Teilnehmerleitung auftretenden Sprachfrequenz, vorzugsweise unterhalb 300 Hz, liegt. In Fig. 4 ist ein linearer Übergang der Ausgangsspannung $V_S$ vorgesehen, es kann der Übergang aber auch durch einen Teil einer sinusförmigen Funktion, vorzugsweise von einem zum darauffolgenden Scheitelwert vollzogen werden, womit der Anteil an Oberwellen gering gehalten werden kann.

Ein weiteres Verlustleistungsproblem bei bekannten Schaltungsanordnungen zur Fernspeisung ergibt sich aus der unterschiedlichen Länge der Teilnehmerleitungen 9 zu den Teilnehmern, da die Ausgangsspannung $V_S$ der Versorgungsspannungsquelle 5 für die längsten Teilnehmerleitungslängen ausgelegt ist.

Die Folge davon ist, daß die Stromquellen 1, 2 bei sehr kurzen Teilnehmerleitungen 9 einen erhöhten Spannungsabfall und damit eine höhere Verlustleitung zu bewältigen haben. Diese Verlustleistung kann sich bei Einrichtungen für viele Teilnehmer zusammen mit anderen Fernspeiseschaltungsanordnungen so weit steigern, daß dafür eigene Kühlsysteme vonnöten sind.

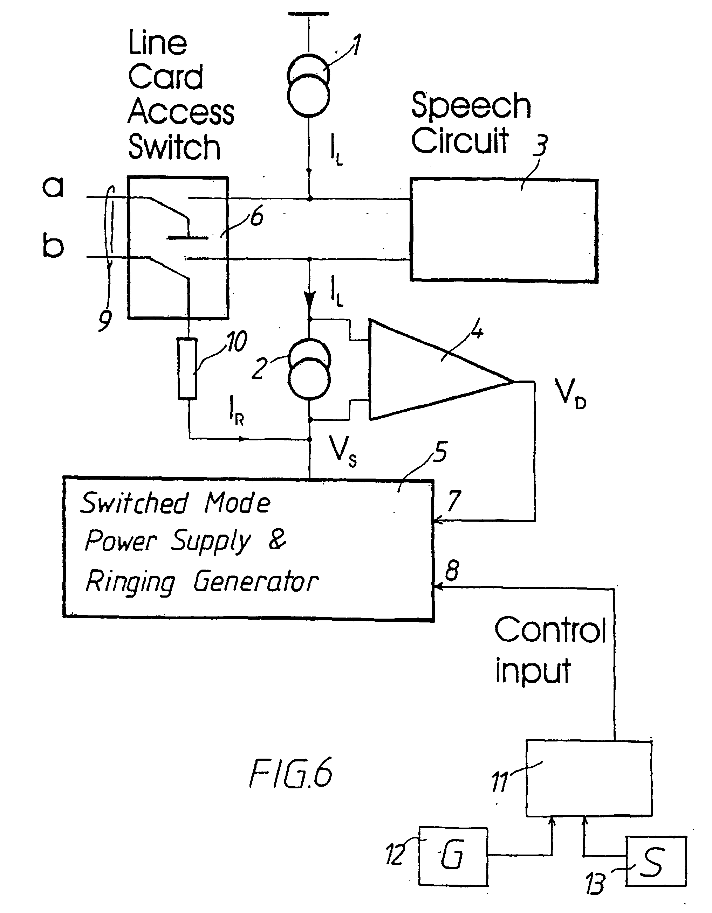

Die in Fig.6 dargestellte Ausführungsform der erfindungsgemäßen Schaltungsanordnung löst dieses Problem über einen zweiten Steuereingang 7 für die Versorgungsspannungsquelle 5, welcher mit dem Ausgang einer weiteren Steuereinheit 4 verbunden ist, die an ihren Eingängen den Spannungsabfall an dem als Konstantstromquelle 2 ausgebildeten Speisungstrennelement abgreift, sodaß die Ausgangsspannung der Versorgungsspannungsquelle 5 in Abhängigkeit von dem am Speisungstrennelement 2 auftretenden Spannungsabfall steuerbar ist.

Es könnte dafür aber auch der Spannungsabfall an beiden Konstantstromquellen 1, 2 oder an der Konstantstromquelle 1 herangezogen werden.

Dadurch kann unabhängig von der Länge der aktuellen Teilnehmerleitung die Verlustleistung sehr niedrig gehalten werden.

Die weitere Steuereinheit ist im Ausführungsbeispiel gemäß Fig.6 durch einen Regelverstärker gebildet, der mit seinen Eingängen den Spannungsabfall an der Konstantstromquelle 2 abgreift und dessen Ausgang mit dem Steuereingang 7 des Schaltreglers 5 verbunden ist, sodaß durch diesen Regelkreis die Spannung an den beiden Anschlüssen der Konstantstromquelle 2 durch Steuern der Versorgungsspannungsquelle 5 immer konstant gehalten wird. Wird also der Spannungsabfall an der Stromquelle 2 aufgrund einer kurzen Teilnehmerleitung 9 größer, so wird der Steuereingang 7 mit einer Spannung $V_D$ so beaufschlagt, daß die Versorgungsspannung $V_S$ erniedrigt wird, wobei der Strom $I_L$ weiter konstant bleibt, aber der Spannungsabfall an der Stromquelle 2 herabgesetzt wird, sodaß die Verlustleistung sich nicht erhöht und keine überschüssige Energie verschwendet wird.

Diese Berücksichtigung der Länge der einzelnen Teilnehmerleitungen durch Anpassung der Versorgungsspannung über den zweiten Eingang 7 überlagert sich der Anpassung an die gerade vorherrschenden Gesprächssignal- und Gebührenimpulspegelwerte über den ersten Eingang 8.

Anstelle der Konstantstromquellen 1 und 2 können, wie vorstehend bereits erwähnt, auch andere äquivalente Vorrichtungen zur Speisung, wie z.B. ohmsche Widerstände, Induktivitäten, elektronische Drosseln o.ä. vorgesehen werden.

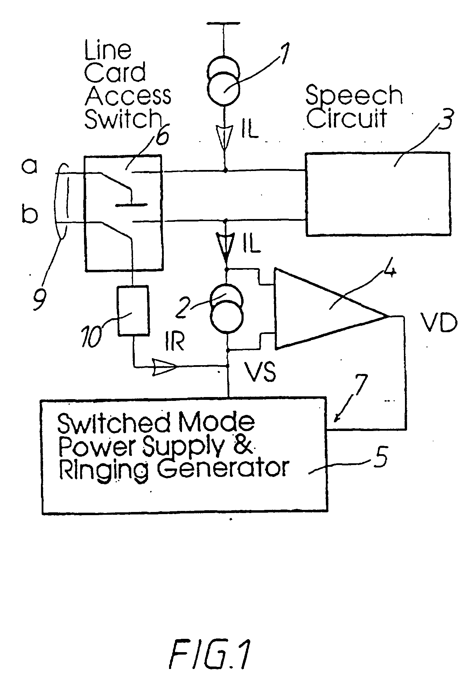

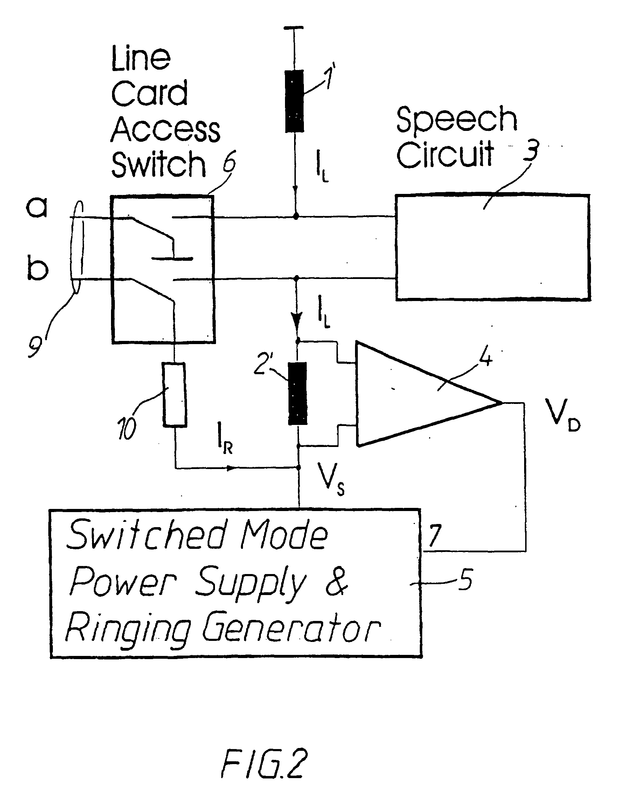

In Fig.1 und Fig.2 sind dazu Ausführungsbeispiele angegeben, in welchen der erste Steuereingang 8 völlig weggelassen worden ist. In dieser vereinfachten Ausführungsform wird eine Steuerung der Ausgangsspannung $V_S$ nur über den zweiten Steuereingang 7 vorgenommen, sodaß diese nur in Abhängigkeit von der gerade vorliegenden Teilnehmerleitungslänge verändert wird. Allein durch diese Maßnahmen kann eine bedeutende Reduktion der anfallenden Verlustleistungen bewirkt werden.

Die Konstantstromquelle 2 ist an ihren beiden Anschlüssen mit dem Regelverstärker 4 verbunden, dessen Ausgang mit dem zweiten Steuereingang 7 des Schaltreglers 5 verbunden ist, sodaß durch diesen Regelkreis die Spannung an den beiden Anschlüssen der Konstantstromquelle 2 durch Steuern der Versorgungsspannungsquelle 5 immer konstant gehalten wird. Wird also der Spannungsabfall an der Stromquelle 2 aufgrund einer kurzen Teilnehmerleitung 9 größer, so wird der Steuereingang 7 mit einer Spannung $V_D$ so beaufschlagt, daß die Versorgungsspannung $V_S$ erniedrigt wird.

Im Ausführungsbeispiel gemäß Fig.2 ist das Speisungstrennelement durch eine Induktivität 1' bzw. 2' gebildet, wobei an den Enden der Induktivität 2' der durch die getaktete Versorgungsspannung $V_S$ bewirkte Spannungsabfall abgreifbar ist und über den Regelverstärker 4 weiterverstärkt wird, welcher den Schaltregler 5 zur Regelung der Versorgungsspannung $V_S$ ansteuert. Die Induktivitäten 1' und 2' können - wie vorstehend bereits erwähnt in Weiterbildung der Erfindung auch durch elektronische Drosseln ersetzt sein.

**Patentansprüche**

1. Schaltungsanordnung zur Fernspeisung eines Teilnehmeranschlusses in einem Kommunikationssystem, insbesondere einem Pair-Gain-System, mit über Teilnehmerleitungen mit einer zentralen Stelle, z.B. einem Ortsteil, verbindbaren Teilnehmern, wobei die Speisespannungs- bzw. -stromzufuhr zum Teilnehmer über jeweils zumindest ein mit dem Teilnehmer und der zugehörigen Teilnehmerleitung in Serie geschaltetes Speisungstrennelement erfolgt, welches zumindest eine Speisungstrennelement mit einem Anschluß mit einer dem Teilnehmer zugeordneten Versorgungsspannungsquelle und mit dem anderen Anschluß mit einer Ader der Teilnehmerleitung verbunden ist, **dadurch gekennzeichnet, daß** die Ausgangsspannung ($V_S$) der Versorgungsspannungsquelle (5) in Abhängigkeit von einer der Verlustleistung der zentralen Stelle proportionalen Meßgröße steuerbar ist.

2. Schaltungsanordnung nach Anspruch 1, **dadurch gekennzeichnet, daß** die der Verlustleistung der zentralen Stelle proportionale Meßgröße durch den Gebührenimpulspegel und/oder den Sprachsignalpegel gebildet ist, und daß die Versorgungsspannungsquelle (5) einen ersten Steuereingang (8) aufweist, welcher mit dem Ausgang einer Steuereinheit (11) verbunden ist, welche in Abhängigkeit vom zeitlichen Verlauf und der Höhe des Gebührenimpulspegels und/oder des Sprachsignalpegels bzw. des auf der Teilnehmerleitung maximal auftretenden Sprachsignalpegels analoge oder digitale Steuersignale erzeugt.

3. Spannungsanordnung nach Anspruch 2, **dadurch gekennzeichnet, daß** eine Erhöhung oder Absenkung der Ausgangsspannung der Versorgungsspannungsquelle (5) infolge der Steuersignale am ersten Steuereingang (8), vorzugsweise entsprechend einer mathematischen Funktion, ansteigend bzw. abfallend erfolgt, sodaß der durch den Übergang bewirkte Anteil an Harmonischen unterhalb der untersten auf der Teilnehmerleitung auftretenden Sprachfrequenz, vorzugsweise unterhalb 300 Hz, liegt.

4. Schaltungsanordnung nach Anspruch 1, 2 oder 3, **dadurch gekennzeichnet, daß** die der Verlustleistung der zentralen Stelle proportionale Meßgröße durch den am Speisungstrennelement auftretenden Spannungsabfall gebildet ist, und daß die Versorgungsspannungsquelle einen zweiten Steuereingang (7) aufweist, welcher mit dem Ausgang einer weiteren Steuereinheit (4) verbunden ist, welche weitere Steuereinheit (4) an ihren Eingängen den Spannungsabfall an dem zumindest einen Speisungstrennelement (2) abgreift, sodaß die Ausgangsspannung der Versorgungsspannungsquelle (5) in Abhängigkeit von dem am Speisungstrennelement (2) auftretenden Spannungsabfall steuerbar ist.

5. Schaltungsanordnung nach Anspruch 4, **dadurch gekennzeichnet, daß** zusätzlich zu dem zumindest einen Speisungstrennelement (2) ein weiteres Speisungstrennelement (1) vorgesehen ist, welches zwischen der anderen Teilnehmerieitungsader (a) und Masse geschaltet ist.

6. Schaltungsanordnung nach Anspruch 4 oder 5, **dadurch gekennzeichnet, daß** das Speisungstrennelement durch eine Konstantstromquelle (1, 2), eine Induktivität (1',2'), eine elektronische Drossel oder einen ohmschen Widerstand (1",2") gebildet ist.

7. Schaltungsanordnung nach einem der Ansprüche 1 bis 6, **dadurch gekennzeichnet, daß** die Versorgungsspannungsquelle durch einen steuerbaren Schaltregler (5) gebildet ist.

8. Schaltungsanordnung nach Anspruch 7, **dadurch gekennzeichnet, daß** der Schaltregler durch einen vorhandenen Rufspannungsgenerator (5) gebildet ist.

9. Schaltungsanordnung nach einem der Ansprüche 4 bis 8, **dadurch gekennzeichnet, daß** die weitere Steuereinheit aus einem Regelverstärker (4) gebildet ist, und daß der Ausgang des Regelverstärkers (4) mit dem zweiten Steuereingang (7) des Schaltreglers (5) verbunden ist, sodaß der Spannungsabfall an den beiden Anschlüssen des Speisungstrennelements (2, 2') durch Steuern der Versorgungsspannungsquelle konstant gehalten wird.

10. Schaltungsanordnung nach Anspruch 8 oder 9, **dadurch gekennzeichnet, daß** der Rufspannungskreis und der Fernspeisungskreis durch einen steuerbaren Schalter, z.B. ein Relais, insbesondere ein Line Card Access Switch (6), umschaltbar sind.

**Claims**

1. A circuit arrangement for the remote supply of a subscriber connection in a communications system, especially a pair-gain system, with subscribers that can be connected with a central location, e.g. a local area, via subscriber lines, with the supply voltage or current feed to the subscriber occurring through at least one supply separating element which is switched in series with the subscriber and the associated subscriber line, which at least one supply separating element is connected with one connection to the supply voltage source associated to the subscriber and with the other connection to a strand of the subscriber line, **characterized in that** the output voltage ($V_s$) of the supply voltage source (5) is controllable depending on a measured variable proportional to the power loss of the central location.

2. A circuit arrangement as claimed in claim 1, **characterized in that** the measured variable which is proportional to the power loss of the central location is formed by the call charge pulse level and/or the voice signal level and that the supply voltage source (5) comprises a first control input (8) which is connected to the output of a control unit (11) which produces analog or digital control signals depending on the progress over time and the level of the call charge level and/or the voice signal level or the voice signal level occurring maximally on the subscriber line.

3. A circuit arrangement as claimed in claim 2, **characterized in that** an increase or reduction of the output voltage of the supply voltage source (5) as a result of the control signals on the first control input (8) occurs in a rising or falling manner, preferably according to a mathematical function, so that the share of harmonics produced by the transition lies below the lowermost voice frequency occurring on the subscriber line, preferably below 300 Hz.

4. A circuit arrangement as claimed in claim 1, 2 or 3, **characterized in that** the measured variable which is proportional to the power loss of the central location is formed by the voltage drop occurring in the supply separating element and that the voltage supply source comprises a second control input (7) which is connected to the output of a further control unit (4), which further control unit (4) taps on its inputs the voltage drop on the at least one supply separating element (2), so that the output voltage of the supply voltage source (5) is controllable depending on the voltage drop occurring on the supply separating element (2).

5. A circuit arrangement as claimed in claim 4, **characterized in that** in addition to the at least one supply separating element (2) a further supply separating element (1) is provided which is switched between the other subscriber line strand (a) and ground.

6. A circuit arrangement as claimed in claim 4 or 5, **characterized in that** the supply separating element is formed by a constant-current source (1, 2), an inductivity (1', 2'), an electronic choke or an ohmic resistor (1", 2").

7. A circuit arrangement as claimed in one of the claims 1 to 6, **characterized in that** the supply voltage source is formed by a controllable switching controller.

8. A circuit arrangement as claimed in claim 7, **characterized in that** the switching controller is formed by an existing ringing voltage generator (5).

9. A circuit arrangement as claimed in one of the claims 4 to 8, **characterized in that** the further control unit is formed by a control amplifier (4) and that the output of the control amplifier (4) is connected to the second control input (7) of the switching controller (5), so that the voltage drop on the two connections of the supply separating element (2, 2') is kept constant by controlling the supply voltage source.

10. A circuit arrangement as claimed in claim 8 or 9, **characterized in that** the ringing voltage circuit and the remote supply circuit can be changed over by a controllable switch, e.g. a relay, in particular a line card access switch (6).


**Revendications**

1. Disposition de circuit pour l'alimentation à distance d'une connexion de participant dans un système de communication, en particulier un système à gain de paire, avec des participants pouvant être reliés par des lignes de participant à un point central, par exemple une section locale, l'alimentation en tension et en courant d'alimentation des participants étant réalisée pour chacun par au moins un élément sectionneur d'alimentation monté en série avec le participant et la ligne de participant correspondante, lequel élément sectionneur d'alimentation au nombre d'un au moins est relié par une connexion à une source de tension d'alimentation associée au participant et par une autre connexion à un conducteur de la ligne de participant, **caractérisée en ce que** la tension de sortie ($V_s$) de la source de tension d'alimentation (5) peut être commandée en fonction d'une grandeur de mesure proportionnelle à la perte de puissance du point central.

2. Disposition de circuit selon la revendication 1, **caractérisée en ce que** la grandeur de mesure proportionnelle à la perte de puissance du point central est formée par le niveau d'impulsions de facturation et (ou) le niveau de signal vocal, et **en ce que** la source de tension d'alimentation (5) présente une première entrée de commande (8), qui est reliée à la sortie d'une unité de commande (11), laquelle produit, en fonction de l'évolution dans le temps et de la hauteur du niveau d'impulsion de facturation et (ou) du niveau de signal vocal ou du niveau de signal vocal maximal apparaissant sur la ligne de participant, des signaux de commande analogiques ou numériques.

3.  Disposition de circuit selon la revendication 2, **caractérisée en ce qu'**une augmentation ou une diminution de la tension de sortie de la source de tension d'alimentation (5) à la suite de signaux de commandes à la première entrée de commande (8), suivant de préférence une fonction mathématique, est effectuée de manière croissante ou décroissante de telle manière que la part d'harmoniques résultant de la transition se situe en dessous de la fréquence vocale la plus basse apparaissant sur la ligne de participant, de préférence en dessous de 300 Hz.

4.  Disposition de circuit selon la revendication 1, 2 ou 3, **caractérisée en ce que** la grandeur de mesure proportionnelle à la perte de puissance du point central est formée par la perte de tension se produisant au niveau de l'élément sectionneur d'alimentation, et **en ce que** la source de tension d'alimentation comprend une deuxième entrée de commande (7) qui est reliée à la sortie d'une autre unité de commande (4), laquelle autre unité de commande (4) capte sur ses entrées la perte de tension au niveau de l'élément sectionneur d'alimentation (2) au nombre d'un au moins, de telle sorte que la tension de sortie de la source de tension d'alimentation (5) puisse être contrôlée en fonction de la perte de tension qui apparaît au niveau de l'élément sectionneur d'alimentation (2).

5.  Disposition de circuit selon la revendication 4, **caractérisée en ce qu'**outre l'élément sectionneur d'alimentation (2) au nombre d'un au moins, il est prévu un autre élément sectionneur d'alimentation (1) qui est monté entre l'autre conducteur de la ligne de participant (a) et la masse.

6.  Disposition de circuit selon la revendication 4 ou 5, **caractérisé en ce que** l'élément sectionneur d'alimentation est formé par une source de courant constant (1, 2), une inductance (1',2'), une self électronique ou une résistance ohmique (1 ", 2").

7.  Disposition de circuit selon l'une quelconque des revendications 1 à 6, **caractérisée en ce que** la source de tension d'alimentation est formée par un commutateur de régulation (5) contrôlable.

8.  Disposition de circuit selon la revendication 7, **caractérisée en ce que** le régulateur de commutation est formé par un générateur de tension d'appel (5) existant.

9.  Disposition de circuit selon l'une quelconque des revendications 4 à 8, **caractérisé en ce que** l'autre unité de commande est formés par un amplificateur de régulation (4), et **en ce que** la sortie de l'amplificateur de régulation (4) est reliée à la seconde entrée de commande (7) du régulateur de commutation (5), de telle sorte que la perte de tension aux deux connexions des éléments sectionneurs d'alimentation (2, 2') soit maintenue constante en contrôlant la source de tension d'alimentation.

10. Disposition de circuit selon la revendication 8 ou 9, **caractérisée en ce que** le circuit de tension d'appel peut être commuté par un commutateur contrôlable, par exemple un relais, en particulier un commutateur d'accès par carte de ligne (6).

Line
Card
Access
Switch

Speech
Circuit

IL

a

b

IL

VD

IR

VS

Switched Mode
Power Supply &
Ringing Generator

FIG.1

FIG.2

FIG.3

FIG.4

FIG.5

FIG.6